# EUROPÄISCHE PATENTSCHRIFT

(11) **EP 4 426 609 B1**
(45) Veröffentlichungstag und Bekanntmachung des Hinweises auf die Patenterteilung: **06.05.2026**
(21) Anmeldenummer: 23751627.3
(22) Anmeldetag: 02.08.2023
(51) Int. Cl.: B64C 3/40

(54) **SCHWENKFLÜGEL ALS TEILPROFIL-SCHWENKFLÜGEL MIT SCHWENKBAREN TEILPROFILEN**
PIVOTING WING AS PARTIAL-PROFILE PIVOTING WING WITH PIVOTABLE PARTIAL-PROFILES
AILE ARTICULÉE SOUS FORME D'AILE ARTICULÉE À PROFIL PARTIEL AVEC PROFILS PARTIELS ARTICULÉS

(30) Priorität: 17.08.2022 AT 601242022
(43) Veröffentlichungstag der Anmeldung: 11.09.2024
(73) Patentinhaber: Innomation GmbH, 2751 Matzendorf (AT)
(72) Erfinder: KARGL, Franz, 3830 Waidhofen an der Thaya (AT)
(74) Vertreter: Schneider, Michael
(86) Internationale Anmeldenummer: PCT/EP2023/071404
(87) Internationale Veröffentlichungsnummer: WO 2024/037875

(56) Entgegenhaltungen:
- CN-U- 206 644 995
- US-A- 2 743 887
- US-A- 5 312 070
- US-A1- 2005 230 519
- US-A1- 2015 225 071
- US-A1- 2016 207 625
- US-A1- 2017 336 184
- US-A1- 2019 322 366
- US-B1- 6 601 795

## Beschreibung

### Technisches Feld

Die Erfindung betrifft einen Schwenkflügel als Teilprofil-Schwenkflügel mit schwenkbaren Teilprofilen.

### Hintergrund

Mit Fluggeräten, wie VTOLs (VTOLs steht hier für Fluggeräte die "Vertical Take-Off and Landing" Fähigkeiten aufweisen, also senkrechtes Starten und Landen beherrschen), die bemannt oder unbemannt sein können, oder UASs (UASs steht hier für "unmanned aerial systems", also unbemanntes Fluggerät) usw. wird versucht, eine Mischung aus herkömmlichem Flugzeug und Hubschrauber zu erschaffen, um verschiedene Flugzustände zu realisieren. VTOLs haben meist eine Mehrzahl an Propellern oder andere Antriebe, welche hubschraubergleich oder ähnlich einem Multikopter das Fluggerät abheben lässt. Der Vorwärtsflug wird ähnlich dem Hubschrauber oder dem Multikopter oder durch einen zusätzlichen Antrieb, welcher das Fluggerät nach vorne bewegt, erzeugt. Hier wird meist kein Tragflügelprofil verwendet.

Im Laufe der Luftfahrtentwicklung wurden auch verschiedenste Konzepte für Fluggeräte mit Schwenkflügeln vorgeschlagen.

So offenbart beispielsweise die DE 37 10914 A1 ein Fluggerät variabler Geometrie mit Einrichtungen zur Anpassung an verschiedene Flugzustände, wobei die Flügel (linker und rechter Gesamtflügel) um vertikale Drehachsen (Hochachse) schwenkbar sind, um die Pfeilung der Fluggeschwindigkeit anzupassen.

Ein weiteres Beispiel für ein Fluggerät mit Schwenkflügeln und verschiedenen Flugzuständen ist beispielsweise aus der DE 20 2016 005 012 U1 bekannt. Dort ist ein senkrechtstartendes und -landendes Flugzeug mit elektrischen Fans (Ventilatoren) in den Flügeln offenbart, welches anlegbare Schwenkflügel besitzt, deren variable Pfeilung zur Trimmung der Auftriebsschwerpunkte der Flügel und der Fans oder bei deren Ausfall verwendet wird. Ein Beispiel für ein Fluggerät mit schwenkbarem Flügel findet sich im Dokument US 2016/207625 A1.

Mit all diesen bekannten schwenkflügel-basierten Fluggeräten geht jedoch das Problem einher, dass sie kein breites Spektrum an wirklich einfach zu realisierenden und - im Hinblick auf die Gesamtschwerpunktslage - stabil zu betreibenden Flugzuständen aufweisen.

Die Erfindung hat sich vor diesem Hintergrund die Aufgabe gestellt, einen verbesserten Schwenkflügel bereitzustellen, mit dessen Hilfe ein wesentlich flexibleres und stabiles Flugverhalten unter verschiedensten Flugzuständen eines damit ausgerüsteten Fluggeräts ermöglicht ist.

### Zusammenfassung der Erfindung

Diese Aufgabe wird durch einen Schwenkflügel gemäß Anspruch 1 gelöst. Der Gegenstand der Erfindung ist daher eine Schwenkflügel für ein Fluggerät, wobei der Schwenkflügel als Teilprofil-Schwenkflügel ausgebildet ist, wobei sich der Teilprofil-Schwenkflügel aus einzelnen Teilprofilen zusammenfügt, wenn diese Teilprofile zusammengeschwenkt sind, wobei die schwenkbaren Teilprofile zumindest einen der nachfolgend angeführten Antriebe aufweisen, nämlich: Motor-Propeller-Kombination; Strahltriebwerk; Impeller; eine andere durch Massenstrom wirkende Antriebsart, und wobei ein durch den Antrieb verursachter Vortrieb in eine Hubkraft umwandelbar ist, insbesondere durch einen schwenkbaren Antrieb, sodass die Richtung des Schubs um die Querachse eines mit dem Schwenkflügel ausgerüsteten Fluggeräts verschwenkbar ist.

Diese Aufgabe wird weiters durch ein Fluggerät gemäß dem Anspruch 12 gelöst. Der Gegenstand der Erfindung ist daher ein Fluggerät, das eine Rumpfkonfiguration, die je nach Ausbildungsform einen Rumpf oder einen Doppelrumpf oder eine Mehrfachrumpfkonstruktion aufweist, und an der linke und der rechten Seite der Rumpfkonfiguration einen erfindungsgemäßen Schwenkflügel aufweist. Weiters können Teilprofil-Schwenkflügel aber auch an Enden von Stummelflügel angebracht sein. Entlang der Rumpfkonfiguration, wie beispielsweise entlang des Einzel-Rumpfes, also der Längserstreckung des Rumpfes vom Heck zum Bug definieren sich die Richtungen links und rechts in herkömmlicher Weise. Der Pilot blickt vom Cockpit aus nach vorne (Bug) in Flugrichtung und die Flügel erstrecken sich zu seiner linken und rechten Seite, also Backbord und Steuerbord.

Diese Aufgabe wird weiters durch ein computerunterstütztes Verfahren gemäß dem Anspruch 15 gelöst. Der Gegenstand der Erfindung ist daher ein computerunterstütztes Verfahren zum Betreiben eines Fluggeräts mit einem Schwenkflügel gemäß Anspruch 1 in den nachfolgend angeführten Flugzuständen, nämlich:
in einem Horizontalflug-Flugzustand, in dem die Teilprofile des jeweiligen Teilprofil-Schwenkflügels zusammengeschwenkt sind und ein so gebildeter Gesamtflügel mit der Wirkung eines Antriebs, insbesondere des jeweiligen Teilprofils, den Fluggeräteauftrieb erzeugt, gleich einem herkömmlichen Flugzeug, und

in einem Transition-Flugzustand, in dem die Teilprofile auseinandergefahren werden, so dass sich aus dem Gesamtflügel Teilflügel bilden, wobei der Fluggerätauftrieb des Gesamtflügels abnimmt, ggf. teils von den einzelnen Teilflügeln übernommen wird, während der Antrieb bzw. eine Wirkrichtung des Antriebs sukzessive derart geschwenkt wird, dass die Abnahme des Auftriebs des Gesamtflügels beim Auseinanderfahren der Teilprofile ausgeglichen wird, und

in einem Starten- bzw. Landen- bzw. Schweben-Flugzustand, in dem die Teilprofile des Teilprofil-Schwenkflügels auseinandergefahren sind und rein die gerichtete Wirkung des Antriebs die für den Starten- bzw. Landen- bzw. Schweben-Flugzustand nötige Kraft erzeugt.

Mit den erfindungsgemäßen Maßnahmen geht die Wirkung einher, dass der in Teilprofile ausschwenkbare bzw. separierbare Teilprofil-Schwenkflügel, also der teilbare Schwenkflügel - die Grundlage dafür liefert, dass ein damit ausgerüstetes Fluggerät maximale Flexibilität hinsichtlich seiner möglichen Flugzustände entfalten kann. Mit Hilfe des auseinandergeschwenkten Schwenkflügels lassen sich die Antriebe zu beiden Seiten des Fluggeräts optimal um den Fluggeräteschwerpunkt verteilen, sodass die Antriebe mit einem maximalen Hebelarm zum Fluggeräteschwerpunkt positionierbar sind, wodurch ein sehr stabiles Flug- bzw. Steuerverhalten gewährleistet ist.

Weiters ist die Erfindung nicht nur auf konventionelle Tragflächen anwendbar, sondern auch bei anderen Anwendungen einsetzbar, die profilbasiert sind, wie z.B. bei Propeller, (Triebwerk-) Fans, Turbinenschaufeln oder Rotorblätter. Durch die nicht ganz auseinandergefahrenen Teilprofile, also wenn noch kein oder nur ein geringer Spalt zwischen den Teilprofilen besteht, entsteht eine Vergrößerung der Flügelfläche mit ihren daraus resultierenden Vorteilen, wenn dies benötigt wird.

So kann das Fluggerät bei zusammengefügten Teilprofilen in dem sogenannten Horizontalflug-Flugmodus bzw. Horizontalflug-Flugzustand wie ein konventionelles Flugzeug geflogen werden. Die zusammengefügten Teilprofile ergeben zur linken wie auch rechten Seite des Rumpfes jeweils einen Gesamtflügel das Fluggeräts mit einem für Flugzeuge typischen Gesamtflügelprofil, welches Gesamtflügelprofil durch die Wirkung des Antriebs mit Luft umströmt wird, wodurch sich der Fluggeräteauftrieb einstellt. In dieser Konfiguration hat das Fluggerät also das Flugverhalten eines konventionellen Flugzeugs. Selbst ohne Wirkung des Antriebs kann es gleiten bzw. segeln. Zusätzlich können an der Vorder-, Ober, Unter-, und Rückseite des Gesamtprofils sämtliche flugzeugtypische Steuerflächen oder Auftriebshilfen verbaut werden (z.B. Deice, Antiice, Vorflügel, Klappen, Ruder udgl.).

Weiters kann das Fluggerät bei auseinandergefahrenen bzw. ausgeschwenkten Teilprofilen, also wenn die Teilprofile des jeweiligen Teilprofil-Schwenkflügels voneinander vereinzelt angeordnet sind und somit nicht mehr den Gesamtflügel bilden, sondern individuelle Teilflügel bilden, entweder in dem sogenannten Transition-Flugzustand oder in dem Starten- bzw. Landen- bzw. Schweben-Flugzustand geflogen werden.

In dem Starten- bzw. Landen- bzw. Schweben-Flugzustand ist die Wirkung des an einem Teilflügel vorgesehenen Antriebs nach unten gerichtet, sodass sich die für diesen Flugzustand nötige und nach unten gerichtete Kraft direkt bzw. ausschließlich durch den Antrieb ergibt. Die jeweiligen Teilflügel haben hierbei nur mehr eine tragende bzw. haltende Wirkung für den jeweiligen Antrieb. In dieser Konfiguration weist das Fluggerät eine Flugverhalten ähnlich einem Hubschrauber bzw. einem Multicopter auf. Dabei entspricht die Konfiguration der Teilflügel mit ihren Antrieben jener eines Quadrocopters oder allgemeiner ähnlich einem Multicopter, was ein äußerst stabiles Flugverhalten selbst bei niedrigster Steig- bzw. Sinkraten oder Horizontal-Geschwindigkeit oder gar bei horizontalem Stillstand oder Schweben mit sich bringt.

Der Transient-Flugzustand oder in anderen Worten der Übergangs-Flugzustand liegt in zwei Situationen vor.

In der ersten Situation wird ein Wechsel von dem Horizontalflug-Flugzustand in den Starten- bzw. Landen- bzw. Schweben-Flugzustand vorgenommen, also sobald die Teilprofile auseinander geschwenkt und der sich dabei reduzierende Auftrieb des jeweiligen Gesamtflügels sukzessive durch eine sich allmählich nach unten (hin zur Erde) ausrichtende Wirkung der Antriebe kompensiert wird.

In anderen Worten ausgedrückt wird die Wirkung des Antriebs beim Auseinanderfahren der Teilprofile durch Schwenken des Antriebs also solches oder seiner Wirkung (Schub) von Vortrieb in eine nach unten wirkende Kraft, im vorliegenden Fall auch als Hubkraft bzw. Hub bezeichnet, umgewandelt, sodass der ursprünglich durch den Antrieb erzeugte Vortrieb, welcher den Fluggeräteauftrieb durch den Gesamtflügel verursacht, sukzessive abnimmt und gleichzeitig die Hubkraft sukzessive zunimmt und damit die Abnahme des Auftriebes des Gesamtflügels übernommen wird, um das Fluggerät in der Luft zu halten bzw. vertikal starten bzw. landen zu lassen.

In der zweiten Situation wird ein Wechsel von dem Starten- bzw. Landen- bzw. Schweben-Flugzustand in den Horizontalflug-Flugzustand vorgenommen, also die Teilprofile zueinander geschwenkt und die zunächst nur nach unten (hin zur Erde) gerichtete Wirkung des Antriebs sukzessive nach hinten gerichtet, während sich der Gesamtflügel bildet und dabei der Auftrieb für das Fluggerät zunächst durch die Umströmung der sich sukzessive annähernden Teilflügel und finalerweise durch den sich bildenden Gesamtflügel übernommen wird.

Beim Übergang von dem Horizontalflug-Flugmodus in den Transient-Flugzustand, also wenn die Teilprofile minimal auseinandergeschwenkt sind, sodass noch keine (weil die Teilprofile an ihren Zusammenfügungen überlappen) oder minimale, definierte Spalten zwischen den Teilprofilen der Teilprofil-Schwenkflügel auftreten, tritt eine gewünschte Vergrößerung der Flügelfläche bzw. der Gesamtprofiltiefe ein, die sich auch vorteilhaft auf das Flugverhalten, insbesondere das Gleitverhalten beim Starten oder Landen oder auch beim Segeln, auswirkt und zielgerichtet für Flugmanöver eingesetzt werden kann.

Der Einsatz des erfindungsgemäßen Teilprofil-Schwenkflügels verbindet flugtechnisch somit beide Welten, nämlich einerseits die des Flugzeugs mit andererseits jener des Hubschraubers bzw. des Multicopter, und erlaubt somit höchst flexible unterschiedliche Flugzustände mit ein und demselben Fluggerät. Dabei entfaltet das Fluggerät im Horizontalflug die von einem herkömmlichen Flugzeug bekannten Eigenschaften, wie z.B. eine hohe Reisegeschwindigkeit und konventionelles Landen und Starten auf einer Rollbahn und Gleitfähigkeit in Notsituationen, und im Starten- bzw. Landen- bzw. Schweben-Flugzustand die von einem Multicopter bekannten Eigenschaften, nämlich platzsparendes Abheben und Landen oder präzise Manövrierfähigkeit sowohl horizontal wie auch vertikal bei niedrigsten Geschwindigkeiten. Weiters kann das Fluggerät flexibel bzw. nahtlos zwischen diesen beiden Flugzuständen wechseln und somit wahlweise angepasst an die jeweiligen Start- bzw. Landeverhältnisse (Landebahn, punktförmige Landezone) oder den jeweiligen Einsatzbereich (z.B. einerseits Langstreckenflug mit hoher Geschwindigkeit oder andererseits Personen- oder Materialtransport in unwegsames Gelände ohne Landemöglichkeit oder schwieriger Landeinfrastruktur, wie z.B. in urbanen Gebieten, angepasst betrieben werden.

Weitere, besonders vorteilhafte Ausgestaltungen und Weiterbildungen der Erfindung ergeben sich aus den abhängigen Ansprüchen sowie der nachfolgenden Beschreibung.

Der Schwenkflügel kann ein schwenkbares Teilprofil oder mehrere schwenkbare Teilprofile aufweisen oder nur aus schwenkbaren Teilprofilen bestehen.

Der Schwenkflügel kann auch eine Kombination aus zumindest einem starren Teilprofil, also nicht schwenkbaren Teilprofil, und zumindest einem schwenkbaren Teilprofil aufweisen. Beispielhaft für diese Ausbildungsform ist ein Schwenkflügel, der aus zwei Teilprofilen besteht (wir betrachten hierfür nur eine Seite des Fluggeräts). Dabei kann der hintere Teilflügel, wenn dieser schon eine größere Pfeilung besitzt (z.B. 30° nach hinten) ein fixer - also starrer - Teilflügel sein, der also das starre Teilprofil aufweist. Das schwenkbare Teilprofil würde für Start/Landung/ Schweben lediglich noch vorne ausgefahren (ausgeschwenkt) und für den Horizontalflug wieder "nach hinten" geschwenkt/ angelegt.

Unabhängig von der konkreten Realisierungsvariante fügen sich die einzelnen Teilprofile, wenn die Teilprofile zusammengeschwenkt sind, zu einem ganzen Tragflügelprofil bzw. einem Gesamtflügelprofil zusammenfügen, und die Teilprofile bilden, wenn die Teilprofile auseinandergefahren bzw. ausgeschwenkt sind, Einzelprofile des Tragflügelprofils.

Die Steuerung der Bewegung der Teilflügel wie auch der Ausrichtung der Wirkung des Antriebs kann von einem versierten Piloten manuell durchgeführt werden. Bevorzugt erfolgt die Steuerung jedoch mit Hilfe eines Bordcomputers des Fluggeräts der so programmiert ist, dass er das computerunterstützte Verfahren bei der Ausführung seines Programms bereitstellt, insbesondere vollautomatisch bei einem unbemannten Fluggerät. Dabei steuert bzw. kontrolliert der Bordcomputer - in Abhängigkeit von Steuer-Eingaben des Piloten oder einer das Fluggerät automatisch fernsteuernden Einrichtung oder vorangegangener Programmierung unter Berücksichtigung verschiedenster Sensordaten und/oder unter Berücksichtigung von Flugroutendaten oder GPS-Daten die Bewegung der Teilflügel wie auch die Wirkungsrichtung der Antriebe.

Die Sensordaten können beispielsweise die Geschwindigkeit des Fluggeräts über Grund, die Höhe über Grund, die Fluglage des Fluggeräts sowie sämtliche Flugparameter usw. und/oder Witterung- bzw. Wetterdaten repräsentieren, die mit Hilfe von Sensoren des Fluggeräts erfasst werden oder per Datenübertragung an das Fluggerät übermittelt wurden.

Der Bordcomputer generiert bei der Abarbeitung des Programms Steuerung-Daten bzw. -Signale, die elektronisch oder optisch (z.B. per Kabel bzw. Signal- bzw. Datenbus) an dem Fachmann bekannte Aktuatoren übertragen werden. Unter einem Aktuator ist eine antriebstechnische Baueinheit zu verstehen, welche Baueinheit ein von dem Bordcomputer ausgegebenes elektrisches Steuerung-Signal oder von dem Bordcomputer ausgegebene Steuerung-Daten in Bewegung oder eine physikalische Größe, wie etwa Druck, umsetzt. Bei den Aktuatoren kann es sich um elektro-mechanische, pneumatische oder auch hydraulische Aktuatoren handeln.

Ein erster Aktuator-Typ ist einerseits mit dem Rumpf des Fluggeräts und anderseits mit dem Teilflügel verbunden und setzt die Steuerung-Daten bzw. -Signale in eine Bewegung des betreffenden Teilflügels um. So bewirkt der erste Aktuator-Typ entweder direkt oder über ein Getriebe das Schwenken der Teilflügeln.

Ein zweiter Aktuator-Typ ist einerseits mit dem betreffenden Teilflügel (dort mit den tragenden Teilen, wie etwa dem Holm oder den Holmen) und anderseits mit dem Antrieb bzw. mit einer Einrichtung zum Beeinflussen der Wirkrichtung des Antriebs des betreffenden Teilflügels verbunden und setzt die Steuerung-Daten bzw. -Signale in eine gewünschte Wirkrichtung des Antriebs um. Bei dieser Umsetzung kann es sich um ein Schwenken des Antriebs handeln, so dass sich die Wirkrichtung des Antriebs von horizontal hin zu vertikal und umgekehrt einstellen lässt. Bei dieser Umsetzung kann es sich jedoch auch um eine Verstellung einer Austrittsöffnung der Einrichtung zum Beeinflussen der Wirkrichtung des Antriebs handeln. Hierbei bleibt die Ausrichtung des Antriebs selbst unbeeinflusst, wohingegen der mit Hilfe des Antriebs generierte Luftstrom / bzw. Massenstrom hinsichtlich seiner Austrittsrichtung aus der Austrittsöffnung zwischen horizontal und vertikal bzw. umgekehrt verändert wird. Dabei kann es sich um einen richtungsvariabel verformbaren Schacht oder um einen Schacht mit einer horizontalen Austrittsöffnung und einer nach unten gerichteten Austrittsöffnung handeln, wobei in dem Schacht mit Hilfe einer verstellbaren Klappe der horizontal austretende Luftstrom- bzw. Massenstromanteil und vertikal austretende Luftstrom- bzw. Massenstromanteil variabel einstellbar ist. Bewirkt der zweite Aktuator-Typ nur die Richtungsänderung des durch den Antrieb verursachten Luft- bzw. Massenstrom und wird dabei die Ausrichtung des Antriebs unverändert gelassen, muss der Aktuator nicht zwingend mit dem Teilflügel verbunden sein, sondern kann auch direkt in den Antrieb integriert sein oder mit diesem als tragendes Element verbunden sein.

Festgehalten sei an dieser Stelle, dass der erste und der zweite Aktuator-Typ hinsichtlich der zum Einsatz kommenden Realisierung unterschiedlich sein können, jedoch grundsätzlich nicht unterschiedlich ausgebildet sein müssen. Die Differenzierung in den ersten und den zweiten Aktuator-Typ erfolgt nur aus Gründen der unterschiedlichen Einsatzzwecke am Fluggerät.

Weiters sei erwähnt, dass die Relativbewegung der Teilprofile zueinander hin bzw. voneinander weg durch die an den Teilprofilen angebrachten einzelnen Antriebe durch eine Änderung des Luftstroms, des Massenstroms bzw. des Impulses an den einzelnen Antrieben angeregt oder durchgeführt werden kann. Es wird also die Bewegung der Teilprofile in die gewünschte Richtung mittels der Antriebe erzeugt

Auch die Steuerung der Antriebe kann grundsätzlich manuell vom Piloten ausgeführt werden. Bevorzugt unterstützt der Bordcomputer dabei den Piloten. Besonders bevorzugt steuert der Bordcomputer in den unterschiedlichen Flugzuständen - in Abhängigkeit von Steuer-Eingaben des Piloten oder einer das Fluggerät automatisch fernsteuernden Einrichtung oder vollautomatisch bzw. autonom - die Antriebe, um die gewünschte Flugreaktion zu erzielen. Es wird in Abhängigkeit von dem jeweiligen Flugmanöver auch die Leistungsbereitstellung für jeden Antriebe separat geregelt, um die gewünschten Flugmanöver durchzuführen und in den verschiedenen Flugzuständen ein stabiles Flugverhalten zu gewährleisten. So lässt sich z.B. in Notfällen, wie z.B. eines Triebwerksausfalles, eine Kompensation einer etwaigen Asymmetrie ausgleichen oder falls notwendig lässt sich eine Asymmetrie schaffen, um z.B. Windböen ausgleichen zu können.

Um den Gesamtflügel mit möglichst hohen Belastungsreserven und somit mit hoher Sicherheit auszustatten, hat es ich als vorteilhaft erwiesen, dass die Teilprofile, wenn die Teilprofile zusammengeschwenkt sind, verriegelt sind. Die Verriegelung kann beispielsweise mittels eines oder mehrerer Bolzen oder einer anderen mechanischen Verriegelung-Vorrichtung realisiert sein, wobei der Bolzen bzw. die Verriegelung-Vorrichtung mit einem Aktuator gekoppelt ist, der durch den Bordcomputer angesteuert wird, um die Verriegelung zu bewirken oder die Verriegelung zu lösen. Besonders bevorzugt ist die Verriegelung mit einem mittels eines Aktuators lösbaren selbst blockierenden Verriegelungsmechanismus realisiert, der, sobald die Teilprofile einander berühren, selbstauslösend verriegelt. Auch die Entriegelung erfolgt entweder manuell durch den Piloten oder gesteuert durch den Bordcomputer.

Der Teilprofil-Schwenkflügel kann zwei oder mehrere Teilprofile aufweisen. Da bevorzugt pro Teilprofil ein Antrieb zur Anwendung kommt, können pro Teilprofil-Schwenkflügel eine zur Anzahl der Teilprofile korrespondierende Anzahl der Antriebe vorgesehen sein. Durch die Erhöhung der Anzahl der Antriebe kann bei gleicher Wirkung z.B. bei Rotor-Antrieben der zum Einsatz kommenden Rotordurchmesser verkleinert werden, was bei Landungen und Abheben (im Horizontalflug-Flugzustand) für mehr Bodenfreiheit beiträgt. Die Länge des Fahrwerks, das den Abstand zwischen Rumpf und Rollbahn definiert, kann also entsprechend kürzer ausgelegt sein, was zu einer stabileren und belastbareren Konfiguration führt.

Wie bereits angesprochen, sei weiters erwähnt, dass die Gesamtheit der Teilprofile des Teilprofil-Schwenkflügels auch ein oder mehrere starr zum Rumpf ausgebildete Teilprofile aufweisen kann.

Besonders bevorzugt weist jedes Teilprofil die äußere Form eines Segments des Tragflügelprofils auf. Somit hat jedes Teilprofil zumindest eine residuale Tragflächenwirkung selbst als Teilflügel, was insbesondere während des Transition-Flugzustands für einen Auftrieb bei Anströmung von vorne sorgt. Des Weiteren fügen sich die Teilprofile im zusammengeschwenkten Zustand nahtlos zu einem Gesamtflügelprofil zusammen, welches Gesamtflügelprofil den für das Fluggerät im Horizontalflug-Flugzustand erforderlichen Auftrieb liefert.

Bevorzugt ist der Aufbau des Teilprofils so gestaltet, dass das Teilprofil aus einem Teilflügelprofilsegment und einem Holm oder mehreren Holmen besteht. Jedes Teilprofil hat die äußere Form eines Segments eines Tragflügelprofils. Das Teilflügelprofilsegment ist / kann strömungsoptimiert ausgelegt sein, wohingegen der Holm dem betreffenden Teilprofil bzw. dem Teilflügel die erforderliche Steifigkeit bzw. Stabilität vermittelt. Der Holm ist in den Teilflügel aufgenommen und verläuft im Wesentlichen entlang der Längserstreckung des Teilflügels. Der Holm weist bevorzugt in seinem Querschnitt in etwa die Form eines I-Trägers auf, die sich zur Kraftübertragung an die Innenseite des Teilflügelprofilsegment anschmiegt. Das Teilflügelprofilsegment definier somit die den Holm - zumindest einseitig, also bezogen auf die Laufrichtung im Horizontalflug-Flugzustand vorderseitig oder rückseitig - umgebende äußere Form des Teilflügels.

Besonders bevorzugt sind das Teilflügelprofilsegment und der Holm als Einzelbauteil ausgebildet. Dies bedeutet, dass die beiden stoffschlüssig miteinander verbunden sind, bevorzugt aus einem Material und nicht aus unterschiedlichen Materialien gefertigt sind, insbesondere in einem Arbeitsgang miteinander hergestellt sind. Diese einteilige Ausbildung verbessert die Belastbarkeit und erleichtert, insbesondere bei der Verwendung von Verbundwerkstoffen, die Herstellung eines möglichst leichten und trotzdem stabilen Teilflügels.

Das Einzelbauteil kann auch durch unterschiedliche miteinander verbundene Materialien ausgeführt werden, wobei diese unterschiedlichen Materialien z.B. durch Verklebung, Nieten, oder andere bekannte Verbindungsarten miteinander verbunden sind.

Gemäß einer besonders bevorzugten Ausbildungsform kann ein starres Teilprofil oder mehrere starre Teilprofile vorgesehen sein. Betrachtet aus der Flugrichtung im Horizontalflug-Flugmodus kann das zumindest eine starre Teilprofil zwischen zwei schwenkbaren Teilprofilen lokalisiert sein oder vor dem ersten schwenkbaren Teilprofil oder nach dem letzten schwenkbaren Teilprofil vorgesehen sein. Das bzw. die starren Teilprofile können zwischen oder hinter oder vor zwei oder mehreren schwenkbaren Teilprofilen vorgesehen sein. Ganz allgemeine kann die Form der Teilprofile, und zwar unabhängig davon, ob es sich um ein starres Teilprofil oder eine schwenkbares Teilprofil handelt, so gestaltet sein, dass die zueinander geschwenkten Teilprofile, also das damit erhaltene Gesamtprofil das Tragflügelprofil oder ein Segment des Tragflügelprofils ergeben. Insbesondere kann das starre Teilprofil als solches eine Form eines Tragflügelprofils aufweisen und das oder die schwenkbaren Teilprofile an ihrer zu dem starren Teilprofil hingewandten Seite an die Form des starren Teilprofils angepasst sein, so dass sich beim Zusammenfügen der Teilprofile wieder das Gesamtflügelprofil ergibt. So kann der aus dem starren Teilprofil gebildete Teilflügel insbesondere auch während des Transition-Flugzustands für einen guten Auftrieb bei Anströmung sorgen und die Antriebe bei ihrer Auftriebswirkung ab einer gewissen Anströmgeschwindigkeit signifikant entlasten.

Bevorzugt können die beweglichen bzw. schwenkbaren Teilprofile im Vergleich zum starren Teilprofil schmäler sein. Schmäler bedeutet hierbei, dass die beweglichen bzw. schwenkbaren Teilprofile im Vergleich zum starren Teilprofil eine geringere Profiltiefe aufweisen. Der Vorteil dieser Ausbildungsform liegt bei einer größeren Flügeltiefe bei schmäleren beweglichen Teilprofilen.

Es sei angemerkt, dass die Profildicke über das Profil (betrachtet im Schnittbild des Gesamtprofils) des Schwenkflügels hinweg im zusammengeschwenkten Zustand bevorzugt stetig verläuft. Dies verringert Verwirbelungen bzw. Ablösungen und erlaubt somit einen leistungs- und somit treibstoffoptimierten Flug bei Verwendung des Teilprofil-Schwenkflügels.

Die maximale Profildicke der beweglichen bzw. schwenkbaren Teilprofile ist bevorzugt geringer als die maximale Profildicke des starren Teilprofils. Die maximale Profildicke ist hierbei die größte Profildicke des jeweiligen Profilabschnitts ohne zusätzliche Aufbauten wie Antennenkonfigurationen oder ähnliches. Das starre Teilprofil weist also bevorzugt, aber nicht zwingend, die größte Profildicke des gesamten Profils des Schwenkflügels auf.

Das schwenkbare Teilprofil weist zumindest einen der nachfolgend angeführten Antriebe auf, nämlich Motor-Propeller-Kombination; Strahltriebwerk; Impeller oder eine andere durch Massenstrom wirkende Antriebsart.

Es können mehrere Antriebe vorgesehen sein, die für die unterschiedlichen Flugzuständen bzw. Flugmodi (primär) zum Einsatz kommen. So kann beispielsweise ein Antrieb vorgesehen sein, der einen Schub nach hinten bereitstellt und somit hauptsächlich für den Horizontalflug-Flugmodus einsetzbar ist, während ein weiterer Antrieb einen im Wesentlichen nach unten hin, also in Lotrichtung, gerichteten Schub bereitstellt und somit den wesentlichen Schub (also die Kraft bzw. Hubkraft) für den Starten- bzw. Landen- bzw. Schweben-Flugzustand bereitstellt. Die beiden verschiedenen Schubrichtungen können unabhängig voneinander bereitgestellt werden und/oder aufeinander synchronisiert abgerufen werden, um kontinuierliche Übergänge zwischen den Flugzuständen umzusetzen.

Ein durch den Antrieb verursachter Vortrieb ist in eine nach unten gerichtete Kraft bzw. Hubkraft umwandelbar, insbesondere durch einen schwenkbaren Antrieb.

Bevorzugt ist der Antrieb derart gegenüber einem Rumpf-Flächenübergang, bzw. einer Tragflächenwurzel des Schwenkflügels, verschwenkbar, sodass die Richtung des Schubs analog zur Verschwenkung des Antriebs veränderbar ist, insbesondere sodass der Schub hin zur Lotrichtung verschwenkbar ist. Erfindungsgemäß ist also die Richtung des Schubs um die Querachse eines mit dem Schwenkflügel ausgerüsteten Fluggeräts verschwenkbar. Hierfür kann das Profil des Schwenkflügels oder ein Teilprofil verschwenkbar, insbesondere gegen die Tragflächenwurzel verschwenkbar, ausgebildet sein. Auch kann der Antrieb selbst gegen das Profil des Schwenkflügels und/oder ein Teilprofil verschwenkbar ausgebildet sein.

Besonders bevorzugt weist bei einem Vorliegen der Konfiguration der Motor-Propeller-Kombination als der Antrieb das nach vorne orientierte Teilprofil des Tragflügelprofils entweder einen Zugpropeller oder einen Druckpropeller und das nach hinten orientierte Teilprofil des Tragflügelprofils entweder einen Zugpropeller oder einen Druckpropeller auf. Diese Kombination trägt zur erhöhten Leistungsbereitstellung bei und verbessert im Horizontalflug-Flugzustand den für den Auftrieb nötigen Luftstrom. Soweit das nach vorne orientierte Teilprofil des Tragflügelprofils den Druckpropeller aufweist, ist es vorteilhaft, dass das vordere Teilprofil länger als das hintere Teilprofil ausgebildet ist.

Im Flug tragen die Teilprofile bzw. die Teilflügel den Rumpf des Fluggeräts, wobei die Kraftübertragung gemäß zweier Ausbildungsformen realisiert sein kann, und zwar wie folgt.

Gemäß einer ersten Ausbildungsform kann das Fluggerät einen Holmkasten aufweisen, wobei die Teilprofile als Einzelholme realisiert sind und jeweils durch Einzelholmbolzen mit dem Holmkasten und dadurch mit dem Rumpf verbunden sind. Die Einzelholme müssen hier nur die jeweilige Belastung des einzelnen Teilflügels übernehmen und können individuell gewartet werden. Auch können die einzelnen Teilflügel in dieser Konfiguration problemlos, also unabhängig voneinander ausgetauscht werden.

Gemäß einer weiteren Ausbildungsform können die Teilprofile aus von der einen Seite des Rumpfes zur anderen Seite des Rumpfes durchgehenden Holmen bestehen, wobei die durchgehenden Holme mit Hilfe einer Zentralaufnahme mit dem Rumpf verbunden sind. Diese durchgehenden Holme überkreuzen sich in der Zentralaufnahme und erstrecken sich also zur linken und rechten Seite des Rumpfes. Daraus ergibt sich der Vorteil, dass der von der linken Seite des Rumpfes bis hin zur rechten Seite des Rumpfes durchgehende Teilflügel einteilig ausgebildet sein kann. Dies verbessert die Stabilität und Belastbarkeit wie auch die Kraftübertragung auf den Rumpf. In diesem Zusammenhang sei angemerkt, dass die Formulierung "Teilprofile als Einzelholme" so zu verstehen ist, dass es sich eben um einen sich beidseitig des Rumpfes erstreckenden Teilflügel handelt.

Für die Fertigung der Teilflügel wie auch der Holme kann auf bestehende Fertigungstechniken und bekannte Materialien zurückgegriffen werden. Abschließend sei noch allgemein erwähnt, dass die erörterten elektronischen Geräte (Bordcomputer bzw. Sensoren usw.) eine Elektronik aufweisen. Die Elektronik kann diskret oder durch integrierte Elektronik oder auch eine Kombination aus beiden aufgebaut sein. Auch können Microcomputer, Micro Controller, Application Specific Integrated Circuits (ASICs), ggf. in Kombination mit analogen oder digitalen elektronischen Peripheriebausteinen zum Einsatz kommen. Viele der erwähnten Funktionalitäten der Geräte werden - ggf. im Zusammenwirken mit Hardwarekomponenten - mit Hilfe einer Software realisiert, die auf einem Prozessor der Elektronik ausgeführt wird. Zur Funkkommunikation ausgebildete Geräte weisen üblicherweise als Bestandteil eines Transceiver-Moduls eine Antennenkonfiguration zum Senden und Empfangen von Funk-Signalen auf. Die elektronischen Geräte können zudem eine interne elektrische Leistungsversorgung aufweisen, die beispielsweise mit einer austauschbaren oder aufladbaren Batterie realisiert sein kann. Auch können die Geräte leitungsgebunden, entweder durch ein externes Netzteil oder über einen Signal- bzw. Datenbus versorgt werden.

Diese und weitere Aspekte der Erfindung ergeben sich durch die nachfolgend erörterten Figuren.

### Figurenkurzbeschreibung

Die Erfindung wird im Folgenden unter Hinweis auf die beigefügten Figuren anhand von Ausführungsbeispielen noch einmal näher erläutert, auf welche die Erfindung jedoch nicht beschränkt ist. Dabei sind in den verschiedenen Figuren gleiche Komponenten mit identischen Bezugszeichen versehen. Es zeigen auf schematische Weise:
Fig. 1 auseinandergefahrene bzw. ausgeschwenkte Teilflügel zweier Teilprofil-Schwenkflügel eines Fluggeräts;
Fig. 2 die ein Gesamtflügelprofil bildenden zusammengeschwenkten Teilflügel gemäß der Figur 1;
Fig. 3a einen aus zwei Teilflügelprofilen zusammengesetzten Gesamtflügel;
Fig. 3b die zwei mit Formschluss zusammengesetzten Teilprofile;
Fig. 3c einen aus drei Teilflügelprofilen zusammengesetzten Gesamtflügel;
Fig. 3d den Gesamtflügel mit einem ein Flügelprofil, aufweisenden Teilprofil;
Fig. 4 eine für jedes der zwei Teilprofile des Gesamtflügels einzeln ausgeführte Einzel-Verbindung mit dem Rumpf des Fluggeräts;
Fig. 5 eine gemeinsame Zentral-Verbindung, verbindend den Rumpf des Fluggeräts mit zwei den Rumpf überspannenden Teilprofilen;
Fig. 6 die Einzelverbindung gemäß der Figur 4 im Fall von drei Teilprofilen;
Fig. 7 die Zentralverbindung gemäß der Figur 5 im Fall von drei Teilprofilen;
Fig. 8 das Fluggerät mit jeweils einer schwenkbaren Zugpropeller-Motorgondel an den Teilflügeln des Gesamtflügels im Flugbild Horizontalflug;
Fig. 9 ein Schwenken der Motorgondel des vorderen Halb- bzw. Teilflügels des Fluggeräts gemäß der Figur 8;
Fig. 10 ein Schwenken der Motorgondel des hinteren Halb- bzw. Teilflügels des Fluggeräts gemäß der Figur 8;
Fig. 11 das Fluggerät mit jeweils einer schwenkbaren Zugpropeller-Motorgondel an dem vorderen Halb- bzw. Teilflügel des Gesamtflügels und einer schwenkbaren Druckpropeller-Motorgondel an dem hinteren Halb-bzw. Teilflügel des Gesamtflügels im Flugbild Horizontalflug;
Fig. 12 ein Schwenken der Motorgondel des jeweiligen Halb-bzw. Teilflügels des Fluggeräts gemäß der Figur 11;
Fig. 13 das Fluggerät im Flugbild Starten- bzw. Landen- bzw. Schweben;
Fig. 14. das Fluggerät mit jeweils einem starren, zentralen Teilprofil des jeweiligen Gesamtflügels im Flugbild Starten- bzw. Landen- bzw. Schweben;
Fig. 15 eine erste Ausbildungsform der drei Teilprofile des Gesamtflügels gemäß der Figur 14;
Fig. 16 eine zweite Ausbildungsform der drei Teilprofile des Gesamtflügels gemäß der Figur 14,
Fig. 17 das Fluggerät gemäß der Fig. 14 mit einer weiteren Ausbildungsform der Teilprofil-Schwenkflügels;
Fig. 18 und 19 unterschiedliche Ausbildungsformen des Fluggeräts betreffend das Verschwenken der Teilprofile.

### Beschreibung der Ausführungsbeispiele

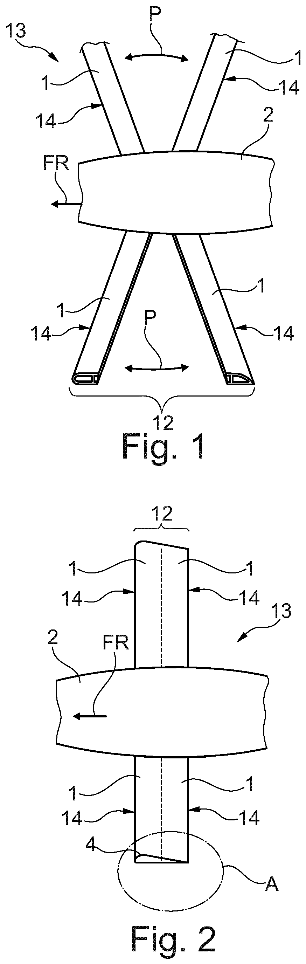

Die Figur 1 zeigt einen Abschnitt eines Rumpfes 2 eines Fluggeräts 13. Zur rechten und zur linken Seite des Rumpfes 2 (bezogen auf die Flugrichtung FR bzw. die Längserstreckung des Rumpfes) erstreckt sich jeweils ein Paar Teilflügel 14 mit einem Teilprofil 1. Die Teilflügel 14 sind angedeutet durch die Pfeile P auseinandergefahren bzw. ausgeschwenkt dargestellt. Sie haben beim Rumpf 2 ihren geringsten Abstand voneinander. Je weiter weg sie sich vom Rumpf 2 erstrecken, umso mehr nimmt der Abstand zwischen ihnen zu. Das Fluggerät 13 nimmt diese Konfiguration der Teilflügel 14 beispielsweise beim vertikalen Starten oder Landen oder beim Schweben ein. Die sich jeweils zur linken und zur rechten Seite des Rumpfes 2 erstreckenden Paare der Teilflügel 14 weisen jeweils das Teilprofiel 1 auf, wobei sich die Teilflügelprofile der Paare der Teilflügel 14 zu einem Gesamtflügel mit einem Gesamtflügelprofil bzw. einem Tragflügelprofil 4 ergänzen, wenn die Paare der Teilflügel 14 zusammengeschwenkt sind, so wie dies in der Figur 2 dargestellt ist. Das Fluggerät 13 gemäß der Fig.2 weist diese Konfiguration der Teilflügel 14 beim Horizontalflug oder bei der Landung oder bei dem Start von einer Rollbahn auf.

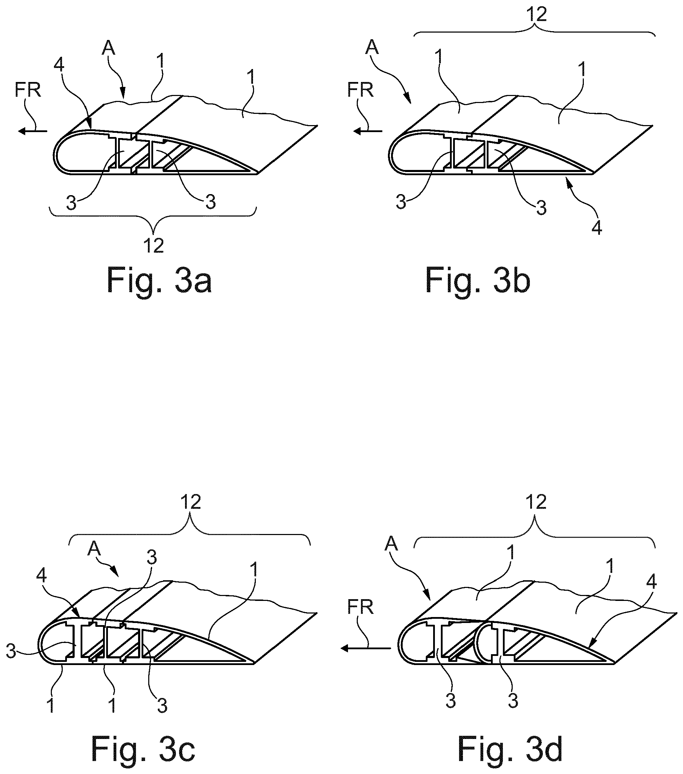

Die Figuren 3a bis 3d zeigen anhand von einem in der Figur 2 eingekreisten Segment A des Gesamtflügels verschiedene Ausbildungsformen des Tragflügelprofils 4, wobei der Gesamtflügel normal zu seiner Längserstreckung geschnitten gezeichnet ist, um einerseits die Teilprofile 1 wie auch das gesamte Tragflügelprofil 4 sichtbar zu machen. Ganz allgemein weist ein Teilflügel 14 einen Holm mit Außenhaut auf und kann nach vorne hin offen oder geschlossen geformt sein. Gleiches gilt auch für die hintere Form des Teilflügels 14.

So zeigt die Figur 3a ein aus zwei Teilprofilen 1 zusammengesetztes Tragflügelprofil 4. Hier zeigt das in Flugrichtung FR orientierte vordere Teilprofil 1 an seiner Vorderseite die für eine Tragfläche eines Flugzeugs typische Rundung, die an der Unterseite der Tragfläche eher flach nach hinten verläuft, wohingegen das Teilprofil 1 an seiner Oberseite eher nach oben aufragend nach hinten hin wieder leicht abfallend gewölbt verläuft. Das von der Flugrichtung weg orientierte hintere Teilprofil 1 zeigt die für eine Tragfläche eines Flugzeugs typische nach hinten hin spitz zusammenlaufende Kontur. Jedes der Teilprofile 1 weist einen Holm 3 auf, der die Form eines I-Trägers zeigt und sich entlang der Längserstreckung des Gesamtflügels erstreckt. Bei dem vorderen Teilprofil 1 schließt der Hom 3 das Teilprofil 1 nach hinten hin ab, wohingegen bei dem hinteren Teilprofil 1 der Holm 3 das hintere Teilprofil 1 nach vorne hin abschließt. Der Holm 3 ist das tragende Bauteil eines Flugzeugflügels, hier konkret des Teilflügels 14. Die Holme 3 können im durch die beiden Teilprofile 1 zusammengesetzten Tragflügelprofil 4 in einem leichten Abstand voneinander positioniert zu liegen kommen oder einander berühren. Bevorzugt überlappen die Holme 3 jedoch leistenartig, so wie dies in der Figur 3b dargestellt ist, damit ein Formschluss zustande kommt, der dem Tragflügelprofil 4 ein hohes Maß an Stabilität verleiht. Das in der Figur 3c dargestellte Tragflügelprofil 4 weist drei Teilprofile 1 auf, deren äußere Konturen im Wesentlichen nahtlos ineinander übergehen, sodass sich bei zusammengeschwenkten Teilprofilen 1 wieder das Tragflügelprofil 4 bildet. Das mittlere Teilprofil 1 bildet hierbei eine Brücke zur Verlängerung der Tragflügelprofil-Tiefe zwischen dem vorderen Teilprofil 1 und dem hinteren Teilprofil 1 und/oder zur Versteifung des Gesamtflügels. Auch das mittlere Teilprofil 1 weist den Holm 3 auf. Das Teilprofil 1 des mittleren Teilflügels 14 ist aerodynamisch ungünstig, was jedoch beim Abbremsen / Verzögern vorteilhaft sein kann. Gleiches gilt für die Teilprofile 1 der hinteren Teilflügel 14 der Ausbildungsformen gemäß den Figuren 3a und 3b. In der Figur 3d ist ein hinteres

Teilprofil 1 dargestellt, das für sich selbst die für eine Tragfläche typische Kontur aufweist. Das vordere Teilprofil 1 ist an seiner dem hinteren Teilprofil 1 zugewandten Seite so geformt, dass die nach vorne gerichtete Rundung des hinteren Teilprofils 1 in einem Bereich benachbart bzw. anschließend an dem Holm 3 aufgenommen wird, wobei auch eine unsymmetrische Überlappung möglich ist.

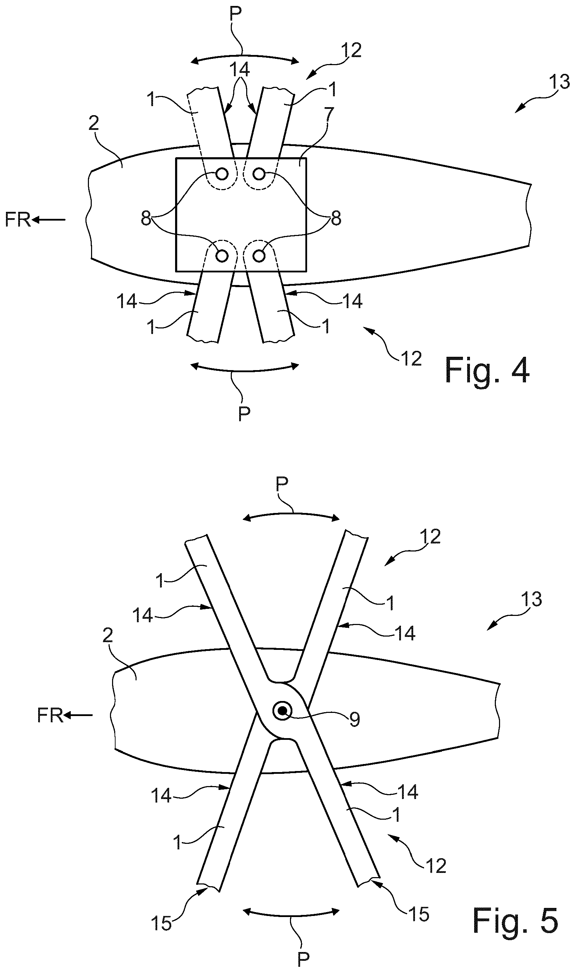

Die Figur 4 zeigt, wie die Teilflügel 14 mit ihrem jeweiligen Teilprofil 1 mit Hilfe eines Holmkastens 7 an dem Rumpf 2 befestigt sind. Hierbei geht es um die Befestigung von vier separaten Teilflügeln 14, wobei sich jeweils zwei der Teilflügel 14 paarweise ausgehend von dem Holmkasten 7 zur jeweiligen Seite (rechte Seite bzw. linke Seite bezogen auf die Flugrichtung FR) des Rumpfes 2 erstrecken. Zu diesem Zweck ist pro Teilflügel 14 ein Einzelholmbolzen 8 vorgesehen, der die schwenkbare Befestigung des Teilflügels 14 mit dem Holmkasten 7 bereitstellt. Jeder Teilflügel 14 ist somit um die jeweiligen Holmachse des betreffenden Einzelholms 8 schwenkbar, also im Wesentlichen um eine vertikale Achse, wenn der Rumpf 2 entlang seiner Längserstreckung im Wesentlichen horizontal ausgerichtet ist. In dieser Konfiguration können alle vier Teilflügel 14 individuell verschwenkt werden, was z.B. mittels vier individueller Aktuatoren bewirkt wird, oder die zur jeweiligen Seite des Rumpfes paarweise sich erstreckenden Teilflügel 14 synchron miteinander verschwenkt werden, was mit zwei Aktuatoren oder sogar mit nur einem einzigen Aktuator und einem Getriebe bewirkt wird.

Die Figur 5 zeigt eine weitere Konfiguration der Teilflügel 14 mit ihrem jeweiligen Teilprofil 1, wobei hier ein sich zur linken Seite des Rumpfes 2 erstreckender Teilflügel 14 und ein sich zur rechten Seite des Rumpfes 2 erstreckender Teilflügel 14 einteilig ausgeführt sind, sodass ein Kombinationsteilflügel 15 vorliegt. Die beiden Teilflügel 14 des Kombinationsteilflügels 15 verlaufen im Wesentlichen in einer Linie oder leicht versetzt zueinander. Diese einteilige Ausbildung ermöglicht die Verwendung einer einzigen Zentralaufnahme 9 für die Befestigung der beiden Kombinationsteilflügel 15, wobei sich die Kombinationsteilflügel 15 um die Zentralaufnahme 9 schwenken lassen. Auch in dieser Konfiguration können die Kombinationsteilflügel 15 separat durch individuelle Aktuatoren oder gemeinsam durch einen gemeinsamen Aktuator verschwenkt werden.

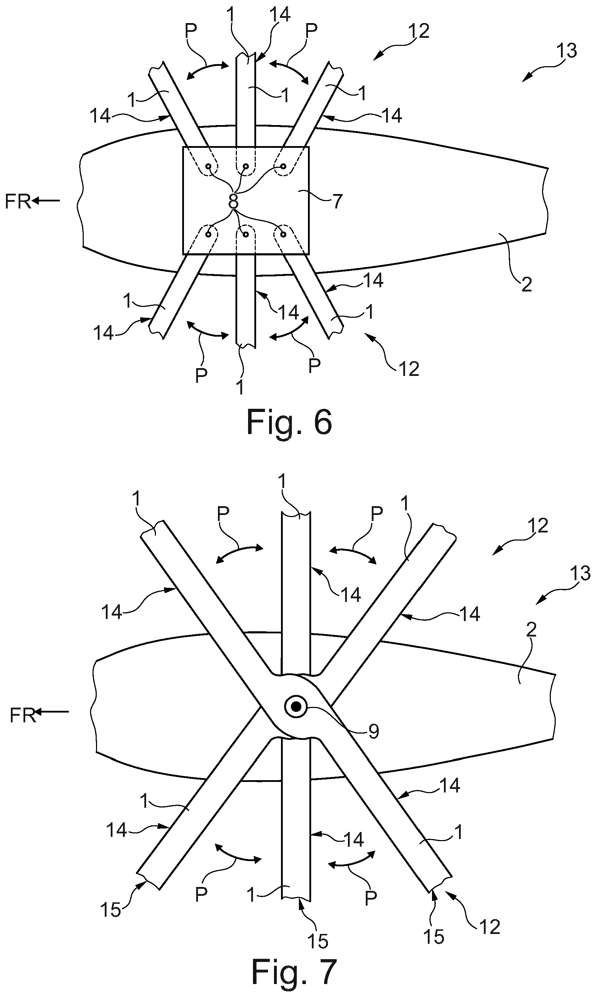

Wie in der Figur 6 dargestellt, können auch mehr als zwei separate Teilflügel 14 vorgesehen sein. Im vorliegenden Fall sind es pro Rumpfseite drei Stück. Jeder Teilflügel 14 ist mittels eines separaten Einzelholmbolzens 8 befestigt. Auch bei von der einen Seite des Rumpfes zur anderen Seite des Rumpfes durchgehenden Teilflügeln 14, also den Kombinationsflügeln, kann die Anzahl erhöht werden, was im Fall der Figur 7 mit drei Kombinationsflügeln visualisiert ist, die wiederum mit der Zentralaufnahme 9 mit dem Rumpf 2 verbunden sind.

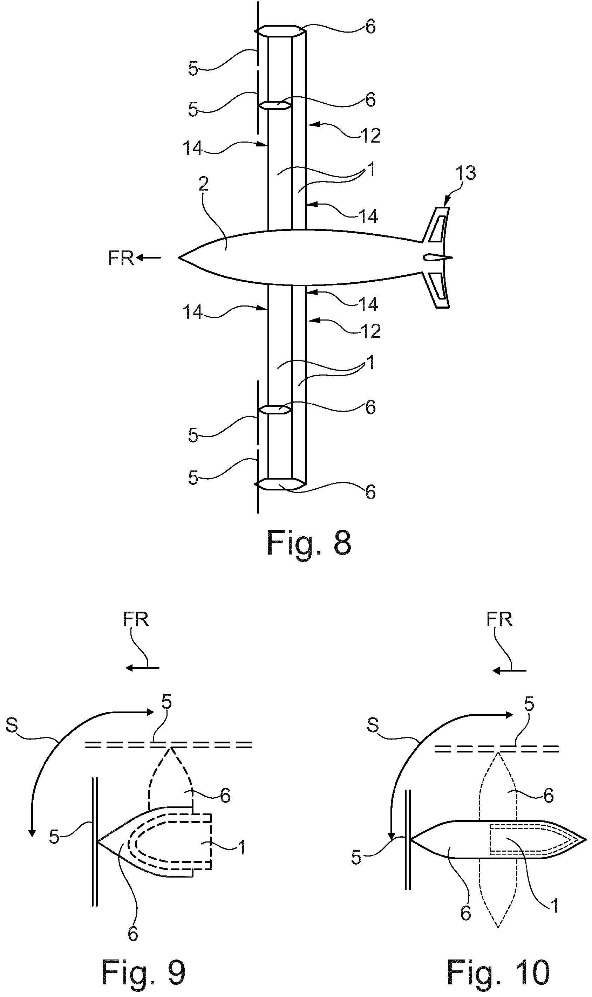

Nachfolgend ist auf die Figur 8 eingegangen, die das Fluggerät 13 von oben in einem Horizontalflug zeigt. Bei diesem Fluggerät 13 ist jeder Teilflügel 14 mit einer Motorgondel 6 mit Zugpropeller 5 ausgerüstet, wobei die äußeren beiden Motorgondeln 6 an den hinteren Teilflügeln 14 angebracht sind und die inneren Motorgondeln 6 an den vorderen Teilflügeln 14 angebracht sind. Jede der Motorgondeln 6 ist derart an den Teilflügeln 14 angebracht, dass sie mit samt dem Propeller 5 gemäß dem angedeuteten Schwenkbereich S (siehe Fig. 9) nach oben geschwenkt werden kann, um mit Hilfe des Propellers 5 eine Hubkraft zu schaffen. Das Motorgondel-Verschwenken ist in der Figur 9 für die an dem vorderen Teilflügel 14 befestigte Motorgondel 6 visualisiert, die in ihren beiden Extremposition einerseits mit durchgezogenen Linien und anderseits mit unterbrochenen Linien gezeichnet ist. Auch ist das Teilprofil 1 des vorderen Teilflügels 14 mit unterbrochenen Linien visualisiert. Das Motorgondel-Verschwenken ist in der Figur 10 für die an dem hinteren Teilflügel 14 befestigte Motorgondel 6 visualisiert, die in ihren beiden Extremposition einerseits mit durchgezogenen Linien und anderseits mit unterbrochenen Linien gezeichnet ist. Auch ist das Teilprofil 1 des hinteren Teilflügels 14 mit unterbrochenen Linien visualisiert.

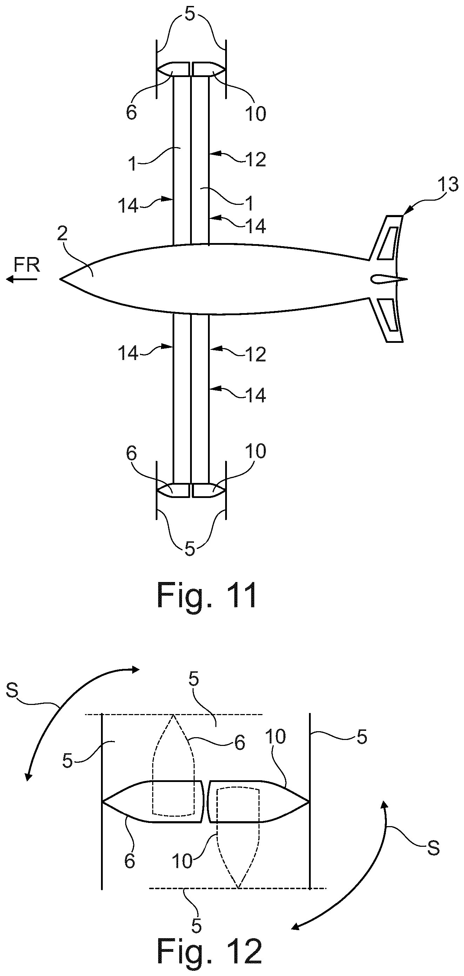

Nachfolgend ist auf die Figur 11 eingegangen, die das Fluggerät 13 von oben in einem Horizontalflug zeigt. Das Fluggerät 13 weist jeweils an den Enden der Teilflügel 14 eine Motorgondel 6 bzw. 10 auf, wobei jeweils an den vorderen Teilflügeln 14 Zugpropeller 5 und an den hinteren Teilflügeln 14 Druckpropeller 5 montiert sind. Jede der Motorgondeln 6, die an den vorderen Teilflügeln 14 vorgesehene sind, ist derart an den Teilflügeln 14 angebracht, dass sie mit samt dem Zugpropeller 5 gemäß dem angedeuteten Schwenkbereich S (siehe Figur 12) nach oben geschwenkt werden kann, um mit Hilfe des Propellers 5 eine Hubkraft zu schaffen. Jede der an den hinteren Teilflügeln 14 vorgesehene Motorgondeln 10 ist derart an den Teilflügeln 14 angebracht, dass sie mit samt dem Propeller 5 gemäß dem angedeuteten Schwenkbereich S (siehe Figur 12) nach unten geschwenkt werden kann, um mit Hilfe des Propellers 5 eine Hubkraft zu schaffen. Das Verschwenken der Motorgondeln 6 ist in weiterer Folge in der Figur 12 visualisiert, wobei an beiden Seiten des Rumpfes 2 die jeweilige Motorgondel 6 mit dem Zugpropeller 5 nach oben geschwenkt wird und die Motorgondel 10 mit dem Druckpropeller 5 nach unten geschwenkt wird. Auf die Darstellung der Teilprofile 1 wurde hierbei verzichtet.

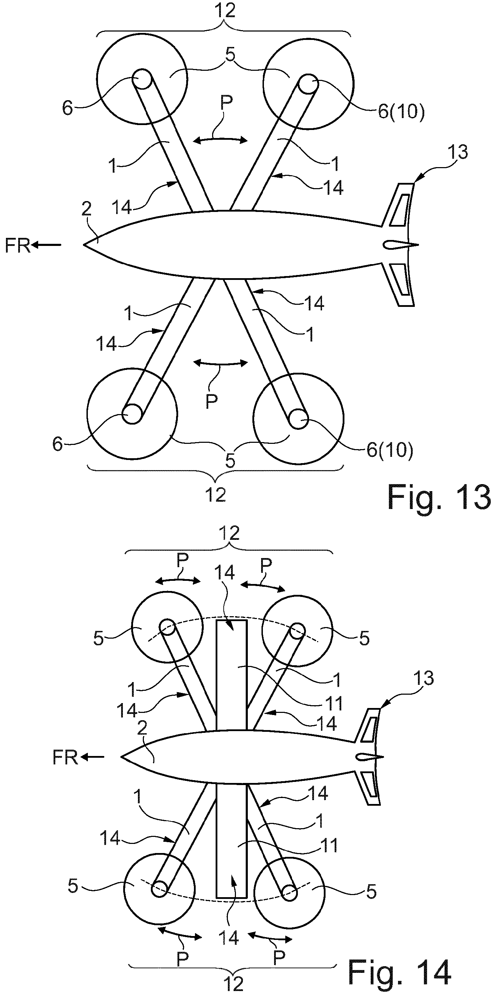

Die Figur 13 zeigt das Fluggerät 13 beim Starten, Landen oder Schweben, wobei die Teilflügel 14 aufgefächert sind, also die Teilprofile 1 auseinandergeschwenkt bzw. ausgeschwenkt sind. Die Wirkung der Propeller 5 ist nach unten gerichtet, sodass die benötigte Hubkraft zustande kommt.

Die Figur 14 zeigt das Fluggerät 13 gemäß einer weiteren Ausbildungsform des Teilprofil-Schwenkflügels 12. In dieser Ausbildungsform ist ein zentraler (mittlerer) und starrer Teilflügel 14 vorgesehen, der nach vorne hin und nach hinten hin von jeweils einem schwenkbaren Teilflügel 14 flankiert wird. Wieder weist jeder schwenkbare Teilflügel 14 die Motorgondel 6 auf. Der starre Teilflügel 14 ist hierbei motorgondel-frei dargestellt. Auch im vorliegenden Fall zeigt die Figur 14 das Fluggerät 13 von oben beim Starten, Landen oder Schweben. Auch hier ist die Wirkung der Propeller 5 nach unten gerichtet, sodass die benötigte Hubkraft zustande kommt.

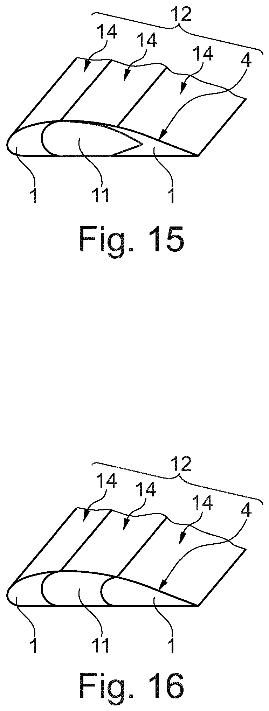

Die Figur 15 zeigt eine erste Ausbildungsform der bei dem Fluggerät 13 gemäß der Figur 14 zum Einsatz kommenden Teilflügel 14. Hierbei weist das starre Teilprofil 11 des zentralen (mittleren) Teilflügels 14 im Wesentlichen die typische Kontur einer Tragfläche auf, wohingegen die beiden benachbarten schwenkbaren Teilprofile 1 derart geformt sind, dass sie den starren Teilflügel 14 an der jeweiligen Seite aufnehmen, sodass sich im Verbund der drei Teilprofile 1 und 11 und 1 wieder das Gesamtflügelprofil bzw. das Tragflügelprofil 4 ergibt. Obwohl vorhanden, wurde hier auf die individuelle Darstellung der Holme verzichtet.

Die Figur 16 zeigt eine zweite Ausbildungsform der bei dem Fluggerät 13 gemäß der Figur 14 zum Einsatz kommenden Teilflügel 14. Hierbei weist das hintere schwenkbare Teilprofil 1 im Wesentlichen die typische Kontur einer Tragfläche auf, wohingegen die beiden davor lokalisierten Teilprofile 1 und 11 nur an ihrer Vorderseite wie auch ihrer Ober- und Unter-Seite analog einer Tragfläche geformt sind. Ihre Rückseiten sind derart geformt, dass das jeweilige entgegen der Flugrichtung FR lokalisierte Teilflügelprofil 11 bzw. 1 nahtlos aufgenommen wird, sodass sich im Verbund der drei Teilprofile 1 und 11 und 1 wieder das Gesamtflügelprofil bzw. das Tragflügelprofil 4 ergibt. Obwohl vorhanden, wurde auch hier auf die individuelle Darstellung der Holme verzichtet.

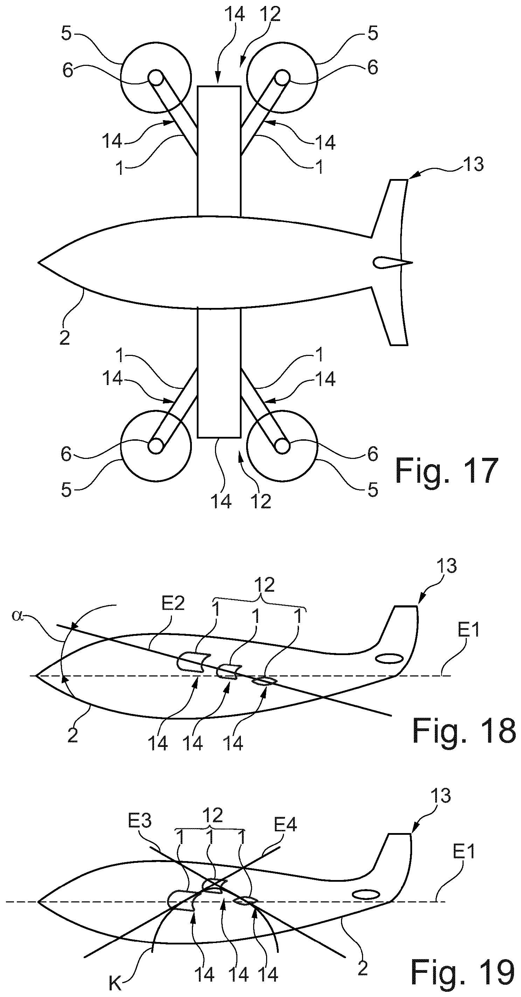

Im Unterschied zu der Figur 14 zeigt die Figur 17, dass die schwenkbaren Teilprofile 1, also der vordere Teilflügel 14 und der hintere Teilflügel 14, mit einem Abstand zum Rumpf 2 an dem nicht schwenkbaren, mittleren Teilflügel 14 schwenkbar befestigt sind. Im vorliegenden Fall ist diese Befestigung etwa mittig entlang des fixen, mittleren Teilflügels 14 vorgesehen. Die Teilprofile 1 der drei Teilflügel 14 können ähnliche Abmessungen bzw. Proportionen haben oder - wie in der Figur 17 angedeutet - oder aber auch stark voneinander abweichen.

In weiterer Folge ist auf die Figuren 18 und 19 eingegangen, in denen unterschiedliche Varianten betreffend das Verschwenken der Teilflügel 14 visualisiert sind. Die dargestellten drei Teilprofile 1 sind wieder so geformt, dass sie zusammengefügt wieder das ganzen Tragflügelprofil 4 bzw. das Gesamtflügelprofil ergeben. Dies ist in den Figuren 18 und 19 mit Hilfe der Größenverhältnisse der drei Teilprofile 1 visualisiert.

Konkret zeigt die Figur 18 eine erste Ebene E1, die normal auf die Zeichenebene und entlang der Fluggeräteachse verläuft. Die Teilprofile 1 sind entlang einer zweiten Ebene E2 verschwenkt dargestellt, wobei am Bug des Fluggeräts 13 betrachtet die zweite Ebene E2 um einen Winkel Alpha (α) gegenüber der ersten Ebene E1 nach oben geneigt ist. Die Schwenkung entlang der zweiten Ebene E2 bewirkt, dass der vordere Teilflügel 14 gegenüber dem mittleren Teilflügel 14 angehoben und der hintere Teilflügel 14 gegenüber dem mittleren Teilflügel 14 abgesenkt wird. Geschwenkt werden hier zumindest der vordere und der hintere Teilflügel 14, wobei der mittlere Teilflügel 14 auch schwenkbar sein kann, jedoch nicht sein muss. Erwähnt sei auch, dass am Bug des Fluggeräts 13 betrachtet die Schwenkung der Ebene E2 bezogen auf die Ebene E1 auch nach unten erfolgen kann. Weiters zeigt die Figur 19, dass der vordere Teilflügel 14 und der hintere Teilflügel 14 in Bezug auf den mittleren Teilflügel 14 entlang unterschiedlicher Ebenen E3 und E4 verschwenkt werden können. Jede dieser Ebenen E3 und E4 kann individuell gegenüber der ersten Ebene E1 geneigt sein. Im vorliegenden Fall wird der vordere Teilflügel 14 entlang der vierten Ebene E4 gegenüber dem mittleren Teilflügel 14 abgesenkt und der hintere Teilflügel 14 wird gegenüber dem mittleren Teilflügel 14 entlang einer dritten Ebene E3 abgesenkt. Erwähnt sei hierbei, dass dieses Verschwenken der Teilflügel 14 auch entlang einer Kurve K erfolgen kann.

In all den erörterten Ausbildungsform, bei denen es zu einer Verschwenkung entlang einer Ebene, wie z.B. der Ebene E2, E3 oder E4, kommt, ist der Schwenkmechanismus zur Veranlassung einer Bewegung in der betreffenden Ebene E2, E3 bzw. E4 ausgebildet bzw. einfach dementsprechend orientiert bzw. geneigt auf die z.B. erste Ebene E1 bzw. die Fluggeräteachse eingebaut. Erfolgt die Verschwenkung entlang einer Kurve, so hat der Schwenkmechanismus die Kurvenform zu ermöglichen. Dazu kann eine entsprechend der Kurvenform gekrümmte Führung zum Führen der Teilflügel 14 vorgesehen sein, sodass z.B. eine Drehbewegung des betreffenden Aktuators in ein Verschwenken des Teilflügels 14 gemäß der Kurvenform umgesetzt wird.

Es wird abschließend noch einmal darauf hingewiesen, dass es sich bei den vorangehend detailliert beschriebenen Figuren nur um Ausführungsbeispiele handelt, welche vom Fachmann in verschiedenster Weise modifiziert werden können, ohne den Bereich der Ansprüche zu verlassen. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können.

## Patentansprüche

1. Schwenkflügel (12) für ein Fluggerät (13), wobei der Schwenkflügel als Teilprofil-Schwenkflügel ausgebildet ist, wobei sich der Teilprofil-Schwenkflügel aus einzelnen Teilprofilen (1) zusammenfügt, wenn diese Teilprofile (1) zusammengeschwenkt sind, wobei
die schwenkbaren Teilprofile (1) zumindest einen der nachfolgend angeführten Antriebe (6, 10) aufweisen, nämlich:
- Motor-Propeller-Kombination;
- Strahltriebwerk;
- Impeller;
- eine andere durch Massenstrom wirkende Antriebsart, und wobei ein durch den Antrieb (6, 10) verursachter Vortrieb in eine Hubkraft umwandelbar ist, insbesondere durch einen schwenkbaren Antrieb (6, 10), **dadurch gekennzeichnet, dass** die Richtung des Schubs um die Querachse eines mit dem Schwenkflügel ausgerüsteten Fluggeräts verschwenkbar ist.

2. Schwenkflügel (12) nach Anspruch 1,
- wobei die einzelnen Teilprofile (1), wenn die Teilprofile (1) zusammengeschwenkt sind, sich zu einem ganzen Tragflügelprofil (4) bzw. einem Gesamtflügelprofil zusammenfügen, und
- wobei die Teilprofile (1), wenn die Teilprofile (1) auseinandergefahren bzw. ausgeschwenkt sind, Einzelprofile des Tragflügelprofils (4) bilden.

3. Schwenkflügel (12) nach einem der vorangehenden Ansprüche, wobei die Teilprofile (1), wenn die Teilprofile (1) zusammengeschwenkt sind, verriegelt sind.

4. Schwenkflügel (12) nach einem der vorangehenden Ansprüche, der zwei oder mehrere Teilprofile (1) aufweist.

5. Schwenkflügel (12) nach einem der vorangehenden Ansprüche, wobei jedes Teilprofil (1) die äußere Form eines Segments des Tragflügelprofils (4) aufweist.

6. Schwenkflügel (12) nach einem der vorangehenden Ansprüche, wobei das Teilprofil (1) aus einem Teilflügelprofilsegment und einem Holm (3) oder mehreren Holmen (3) besteht, vorzugsweise wobei das Teilflügelprofilsegment und der Holm (3) als Einzelbauteil ausgebildet sind.

7. Schwenkflügel (12) nach einem der vorangehenden Ansprüche, der ein starres Teilprofile (11) oder mehrere starre Teilprofile (11) aufweist.

8. Schwenkflügel (12) nach Anspruch 7, wobei die beweglichen bzw. schwenkbaren Teilprofile (1) im Vergleich zu dem starren Teilprofil (11) schmäler sind.

9. Schwenkflügel (12) nach einem der vorangehenden Ansprüche, wobei der Antrieb (6, 10) gegenüber einem Rumpf-Flächenübergang bzw. einer Tragflächenwurzel des Schwenkflügels verschwenkbar ist, sodass die Richtung des Schubs analog zur Verschwenkung des Antriebs (6, 10) veränderbar ist.

10. Schwenkflügel (12) nach einem der vorangehenden Ansprüche, wobei das Profil des Schwenkflügels (12) oder ein Teilprofil (1) verschwenkbar, insbesondere gegen eine Tragflächenwurzel des Schwenkflügels verschwenkbar, ausgebildet ist, oder wobei der Antrieb (6, 10) selbst gegen das Profil des Schwenkflügels (12) und/oder ein Teilprofil (1) verschwenkbar ausgebildet ist.

11. Schwenkflügel (12) nach Anspruch 1, wobei bei einem Vorliegen der Konfiguration der Motor-Propeller-Kombination als Antrieb (6, 10) das nach vorne orientierte Teilprofil (1) des Tragflügelprofils (4) einen Zugpropeller oder einen Druckpropeller und das nach hinten orientierte Teilprofil (1) des Tragflügelprofils (4) entweder einen Zugpropeller oder einen Druckpropeller aufweist.

12. Fluggerät (13), das eine Rumpfkonfiguration, die je nach Ausbildungsform einen Rumpf (2) oder einen Doppelrumpf oder eine Mehrfachrumpfkonstruktion aufweist, und an der linken und der rechten Seite der Rumpfkonfiguration einen Schwenkflügel (12) gemäß einem der Ansprüche 1 bis 11 aufweist.

13. Fluggerät (13) nach Anspruch 12, das einen Holmkasten (7) aufweist, wobei die Teilprofile (1) als Einzelholme realisiert sind und jeweils durch Einzelholmbolzen (8) mit dem Holmkasten (7) und dadurch mit dem Rumpf (2) verbunden sind.

14. Fluggerät (13) nach Anspruch 12, wobei die Teilprofile (1) aus von der einen Seite des Rumpfes (2) zur anderen Seite des Rumpfes (2) durchgehenden Holmen bestehen, wobei die durchgehenden Holme mit Hilfe einer Zentralaufnahme (9) mit dem Rumpf (2) verbunden sind.

15. Computerunterstütztes Verfahren zum Betreiben eines Fluggeräts (13) mit einem Schwenkflügel (12) gemäß einem der Ansprüche 1 bis 11 in den nachfolgend angeführten Flugzuständen, nämlich:
- in einem Horizontalflug-Flugzustand, in dem die Teilprofile (1) des jeweiligen Teilprofil-Schwenkflügels zusammengeschwenkt sind und ein so gebildeter Gesamtflügel mit der Wirkung eines Antriebs (6, 10), insbesondere des jeweiligen Teilprofils (1), den Fluggeräteauftrieb erzeugt, gleich einem herkömmlichen Flugzeug, und
- in einem Transition-Flugzustand, in dem die Teilprofile (1) auseinandergefahren werden, so dass sich aus dem Gesamtflügel Teilflügel (14) bilden, wobei der Fluggerätauftrieb des Gesamtflügels abnimmt, ggf. teils von den einzelnen Teilflügeln übernommen wird, während der Antrieb bzw. eine Wirkrichtung des Antriebs sukzessive derart geschwenkt wird, dass die Abnahme des Auftriebs des Gesamtflügels beim Auseinanderfahren der Teilprofile ausgeglichen wird, und
- in einem Starten- bzw. Landen- bzw. Schweben-Flugzustand, in dem die Teilprofile (1) des Teilprofil-Schwenkflügels auseinandergefahren sind und rein die gerichtete Wirkung des Antriebs (6, 10) die für den Starten- bzw. Landen- bzw. Schweben-Flugzustand nötige Kraft erzeugt.

## Claims

1. A pivoting wing (12) for an aircraft (13),
wherein the pivoting wing is designed as a partial-profile pivoting wing, wherein the partial-profile pivoting wing is assembled from individual partial profiles (1) when these partial profiles (1) are pivoted together, wherein
the pivotable partial profiles (1) comprise at least one of the following propulsion systems (6, 10), namely:
- an engine-propeller combination;
- a jet engine;
- an impeller;
- another type of mass flow-driven propulsion, and wherein
a forward thrust caused by the propulsion system (6, 10) can be converted into a lifting force, in particular by a pivotable propulsion system (6, 10), **characterized in that**
the direction of thrust is pivotable around the transverse axis of an aircraft fitted with a pivoting wing.

2. Pivoting wing (12) according to claim 1,
- wherein the individual partial profiles (1) fit together into a complete airfoil profile (4) or a full wing profile when the partial profiles (1) are pivoted together, and
- wherein the partial profiles (1) form individual profiles of the airfoil profile (4) when the partial profiles (1) are driven apart or swung out.

3. Pivoting wing (12) according to any one of the preceding claims, wherein the partial profiles (1) are locked when the partial profiles (1) are pivoted together.

4. Pivoting wing (12) according to any one of the preceding claims, which comprises two or more partial profiles (1).

5. Pivoting wing (12) according to any one of the preceding claims, wherein each partial profile (1) comprises the outer shape of a segment of the airfoil profile (4).

6. Pivoting wing (12) according to any one of the preceding claims, wherein the partial profile (1) consists of a partial wing profile segment and a spar (3) or multiple spars (3), preferably wherein the partial wing profile segment and the spar (3) are designed as a single component.

7. Pivoting wing (12) according to any one of the preceding claims, which comprises a fixed partial profile (11) or multiple fixed partial profiles (11).

8. Pivoting wing (12) according to claim 7, wherein the movable or pivotable partial profiles (1) are narrower as compared with the fixed partial profile (11).

9. Pivoting wing (12) according to any one of the preceding claims, wherein the propulsion system (6, 10) is pivotable relative to a fuselage-wing transition or a wing root of the pivoting wing, such that the direction of thrust can be varied corresponding to the pivoting of the propulsion system (6, 10).

10. Pivoting wing (12) according to any one of the preceding claims, wherein the profile of the pivoting wing (12) or a partial profile (1) is designed to be pivotable, in particular pivotable against a wing root of the pivoting wing, or wherein the propulsion system (6, 10) itself is designed to be pivotable against the profile of the pivoting wing (12) and/or a partial profile (1).

11. Pivoting wing (12) according to claim 1, wherein, when the engine-propeller combination is configured as the propulsion system (6, 10), the forward-facing partial profile (1) of the airfoil profile (4) comprises a pull propeller or a push propeller, and the rearward-facing partial profile (1) of the airfoil profile (4) comprises either a pull propeller or a push propeller.

12. An aircraft (13) comprising a fuselage configuration which, depending on its design, comprises a fuselage (2), a twin-fuselage, or a multi-fuselage structure, and comprising a pivoting wing (12) according to any one of claims 1 to 11 on the left side and on the right side of the fuselage configuration.

13. Aircraft (13) according to claim 12, which comprises a spar box (7), wherein the partial profiles (1) are implemented as individual spars and are each connected to the spar box (7) and thereby to the fuselage (2) by individual spar bolts (8).

14. Aircraft (13) according to claim 12, wherein the partial profiles (1) consist of spars extending continuously from one side of the fuselage (2) to the other side of the fuselage (2), wherein the continuous spars are connected to the fuselage (2) by means of a central mounting (9).

15. A computer-assisted method for operating an aircraft (13) with a pivoting wing (12) according to any one of claims 1 to 11 in the following flight conditions, namely:
- in a level flight condition, in which the partial profiles (1) of the respective partial-profile pivoting wing are pivoted together and a resulting full wing generates the aircraft lift, similar to a conventional aircraft, through the action of a propulsion system (6, 10), in particular of the respective partial profile (1), and
- in a transition flight condition, in which the partial profiles (1) are driven apart so that partial wings (14) are formed from the full wing, whereby the aircraft lift of the full wing decreases, which may be partially taken over by the individual partial wings, while the propulsion or a direction of action of the propulsion is successively pivoted in such a way that the decrease in lift of the full wing is compensated for when the partial profiles are driven apart, and
- in a takeoff, landing, or hovering flight condition, in which the partial profiles (1) of the partial-profile pivoting wing are driven apart and the directed action of the propulsion system (6, 10) alone generates the force required for the takeoff, landing, or hovering flight condition.

## Revendications

1. Aile pivotante (12) pour un aéronef (13),
l'aile pivotante étant réalisée comme une aile pivotante à profilé partiel, l'aile pivotante à profilé partiel se constituant de profilés partiels individuels (1) lorsque ces profilés partiels (1) sont pivotés les uns vers les autres,
les profilés partiels pivotants (1) comprenant au moins l'un des propulseurs (6, 10) ci-dessous, à savoir :
- une combinaison moteur-hélice ;
- un réacteur ;
- une turbine ;
- un autre type de propulsion agissant par débit massique, et dans lequel une poussée générée par le propulseur (6, 10) est convertible en portance, en particulier par un propulseur (6, 10) réalisé de manière à pouvoir pivoter,
**caractérisé en ce que**
la direction de la poussée peut être pivoté autour de l'axe transversal d'un aéronef équipé d'une aile pivotante.

2. Aile pivotante (12) selon la revendication 1,
- dans laquelle les différents profilés partiels (1), lorsque les profilés partiels (1) sont pivotés les uns vers les autres, s'assemblent pour former un profilé d'aile portante (4) complet ou un profilé d'aile globale, et
- les profilés partiels (1), lorsque les profilés partiels (1) sont écartés ou déployés, formant des profilés individuels du profilé d'aile portante (4).

3. Aile pivotante (12) selon l'une des revendications précédentes, dans laquelle les profilés partiels (1) sont verrouillés lorsque les profilés partiels (1) sont pivotés les uns vers les autres.

4. Aile pivotante (12) selon l'une des revendications précédentes, qui comprend deux ou plusieurs profilés partiels (1).

5. Aile pivotante (12) selon l'une des revendications précédentes, chaque profilé partiel (1) comprenant la forme extérieure d'un segment du profilé d'aile portante (4).

6. Aile pivotante (12) selon l'une des revendications précédentes, le profilé partiel (1) étant constitué d'un segment de profilé d'aile partiel et d'un longeron (3) ou de plusieurs longerons (3), de préférence le segment de profilé d'aile partiel et le longeron (3) étant réalisés sous la forme d'un composant unique.

7. Aile pivotante (12) selon l'une des revendications précédentes, qui comprend un profilé partiel rigide (11) ou plusieurs profilés partiels rigides (11).

8. Aile pivotante (12) selon la revendication 7, dans lequel les profilés partiels mobiles ou pivotants (1) sont plus étroits que le profilé partiel rigide (11).

9. Aile pivotante (12) selon l'une des revendications précédentes, dans laquelle le propulseur (6, 10) est réalisé de manière à pouvoir pivoter par rapport à une raccordement fuselage-aile ou à une emplanture de l'aile pivotante, de sorte que la direction de la poussée peut être modifiée de manière analogue au pivotement du propulseur (6, 10).

10. Aile pivotante (12) selon l'une des revendications précédentes, dans laquelle le profilé de l'aile pivotante (12) ou un profilé partiel (1) est réalisé de manière à pouvoir pivoter, en particulier réalisé de manière à pouvoir pivoter contre une emplanture de l'aile pivotante, ou dans laquelle le propulseur (6, 10) lui-même est réalisé de manière à pouvoir pivoter contre le profilé de l'aile pivotante (12) et/ou un profilé partiel (1).

11. Aile pivotante (12) selon la revendication 1, dans laquelle, lorsque la configuration de la combinaison moteur-hélice est utilisée comme propulseur (6, 10), le profilé partiel (1) orienté vers l'avant du profilé d'aile portante (4) comprend une hélice de traction ou une hélice de poussée et le profilé partiel (1) orienté vers l'arrière du profilé d'aile portante (4) comprend soit une hélice de traction, soit une hélice de poussée.

12. Aéronef (13) qui comprend une configuration de fuselage comportant, en fonction de son mode de réalisation, un fuselage (2), un fuselage double ou une construction à fuselages multiples, et qui comprend, sur les côtés gauche et droit de la configuration de fuselage, une aile pivotante (12) selon l'une des revendications 1 à 11.

13. Aéronef (13) selon la revendication 12, qui comprend un caisson de voilure (7), les profilés partiels (1) étant réalisés sous la forme de longerons individuels et étant chacun reliés au caisson de voilure (7) et, par ce moyen, au fuselage (2) par des boulons de longeron individuels (8).

14. Aéronef (13) selon la revendication 12, dans lequel les profilés partiels (1) sont constitués de longerons traversants s'étendant d'un côté du fuselage (2) à l'autre côté du fuselage (2), les longerons traversants étant reliés au fuselage (2) à l'aide d'un logement central (9).

15. Procédé assisté par ordinateur pour faire voler un aéronef (13) équipé d'une aile pivotante (12) selon l'une des revendications 1 à 11 dans les conditions de vol ci-dessous, à savoir :
- dans un état de vol en palier, dans lequel les profilés partiels (1) de l'aile pivotante à profilé partiel respective sont pivotés les uns vers les autres et une aile globale ainsi formée génère la portance de l'aéronef sous l'effet d'un propulseur (6, 10), en particulier du profilé partiel (1) respectif, à l'instar d'un avion classique, et
- dans un état de vol de transition, dans lequel les profilés partiels (1) sont écartés, de sorte que des ailes partielles (14) se forment à partir de l'aile globale, la portance de l'aile globale diminuant, le cas échéant, est partiellement prise en charge par les ailes partielles individuelles, tandis que la propulsion ou une direction d'action de la propulsion est successivement pivotée de telle sorte que la diminution de la portance de l'aile globale lors de l'écartement des profilés partiels soit compensée, et
- dans un état de vol de décollage, d'atterrissage ou de vol stationnaire, dans lequel les profilés partiels (1) de l'aile pivotante à profilés partiels sont déployés et où l'effet directionnel du propulseur (6, 10) génère à lui seul la force nécessaire à l'état de vol de décollage, d'atterrissage ou de vol stationnaire.
